# EUROPEAN PATENT APPLICATION

(11) **EP 3 159 541 A1**
(43) Date of publication of application: **26.04.2017**
(21) Application number: 15809326.0
(22) Date of filing: 10.06.2015
(51) Int. Cl.: F04B 49/08, H02P 6/16

(54) **LIQUID DISCHARGE DEVICE**

(30) Priority: 20.06.2014 JP 2014127634
(71) Applicant: Hitachi Koki Co., Ltd., Tokyo 108-6020 (JP)
(72) Inventor: FUNABASHI, Kazuhiko, Hitachinaka-City Ibaraki 312-8502 (JP); TAKANO, Nobuhiro, Hitachinaka-City Ibaraki 312-8502 (JP); SUDO, Tomoaki, Hitachinaka-City Ibaraki 312-8502 (JP)
(74) Representative: Parker, Andrew James
(86) International application number: PCT/JP2015/066696
(87) International publication number: WO 2015/194426

(57) **Abstract**

A high-pressure washing machine is provided, which can stop a brushless motor even if the function of a microcomputer declines. The high-pressure washing machine is provided as a high-pressure washing machine 10 having a pump 12 which sucks and discharges a washing solution and a brushless motor 14 supplied with current to drive the pump 12. The high-pressure washing machine 10 includes an inverter circuit 29 which when the pump 12 driven by power from the brushless motor 14 discharges the washing solution, controls the rotation speed of the brushless motor 14, a driver circuit 30, a microcomputer 31, and a motor operation stopping circuit 37 which detects the discharge pressure of the pump 12 and which based on the result of the detection, switches on and off an electric circuit E1, which supplies current to the brushless motor 14.

## Description

### TECHNICAL FIELD

The present invention relates to a liquid discharge apparatus having a pump for discharging liquid.

### BACKGROUND ART

A liquid discharge apparatus having a pump for discharging liquid has been conventionally known, and such a liquid discharge apparatus is described in Patent Document 1. The liquid discharge apparatus described in Patent Document 1 is a high-pressure washing machine which sprays the liquid to an object to wash the object. This high-pressure washing machine includes a machine body, a pump provided in the machine body, a brushless motor which drives the pump, an inverter circuit provided between an alternate-current power supply and the brushless motor, an inverter control unit which controls the inverter circuit, and a pressure setting dial which inputs a speed command signal to the inverter control unit. By the inverter circuit and the inverter control unit, a motor control unit is configured.

The high-pressure washing machine also includes a rotation-speed detecting sensor which detects the rotations of the brushless motor. A suction port of the pump is connected to a hose which feeds tap water, while a discharge port of the pump is connected to a washing gun via a high-pressure hose. A trigger and a nozzle are provided to the washing gun.

In the high-pressure washing machine described in Patent Document 1, power from the alternate-current power supply is supplied through the inverter circuit to the brushless motor, and the pump is driven by a torque of the brushless motor. When the pump is driven, tap water is sucked into the pump, and high-pressure water discharged from the pump is supplied through the high-pressure hose to the washing gun. When an operator operates the trigger, the valve is opened so that the high-pressure water is jetted from the nozzle.

In the high-pressure washing machine described in Patent Document 1, when a jet pressure of the high-pressure water is set by operating the pressure setting dial, an actual rotation speed of the brushless motor is feedback-controlled so that the actual rotation speed of the brushless motor is a rotation speed in accordance with the set jet pressure. Therefore, the pressure of the high-pressure water jetted from the nozzle can be controlled.

### RELATED ART DOCUMENT

### PATENT DOCUMENT

Patent Document 1: Japanese Patent Application Laid-open Publication No. 2005-313008

### SUMMARY OF THE INVENTION

### PROBLEMS TO BE SOLVED BY THE INVENTION

However, the liquid discharge apparatus described in Patent Document 1 has a possibility in which the electric motor cannot stop if the function of the motor control unit made up of the inverter circuit and the inverter control unit decreases when the electric motor is rotating.

An object of the present invention is to provide a liquid discharge apparatus which can stop an electric motor even if a motor control unit fails an operation.

### MEANS FOR SOLVING THE PROBLEMS

A liquid discharge apparatus according to one embodiment has an electric motor which is rotated by supply of a current, and a pump which is driven by a torque of the electric motor to suck and discharge liquid. The liquid discharge apparatus also includes a motor control unit which controls a rotation speed of the electric motor when the pump is driven by the torque of the electric motor, and a switch mechanism which detects a discharge pressure of the pump and which switches on and off a path for supplying a current to the electric motor based on the result of the detection.

A liquid discharge apparatus according to another embodiment has an electric motor which is rotated by supply of a current, and a pump which is driven by a torque of the electric motor to suck and discharge liquid. The liquid discharge apparatus also includes a pressure detecting unit which detects a pressure of the pump, a first circuit which stops the electric motor based on an input signal from the pressure detecting unit, and a second circuit provided on a path for supplying a current to the electric motor so as to be separated from the first circuit and which closes the current path based on an input signal from the pressure detecting unit to stop the electric motor.

### EFFECTS OF THE INVENTION

According to the present invention, when the function of the motor control unit decreases, the switch mechanism switches off the path for supplying the current to the electric motor, so that the electric motor can stop.

### BRIEF DESCRIPTIONS OF THE DRAWINGS

FIG. 1 is a schematic view of a high-pressure washing machine and a washing gun according to an embodiment of a liquid discharge apparatus of the present invention;
FIG. 2 is a block diagram showing a control system of the high-pressure washing machine shown in FIG. 1;
FIG. 3 is a flowchart showing a first control example which can be executed by the high-pressure washing machine of FIG. 2;
FIG. 4 is a time chart corresponding to the flowchart of FIG. 3;
FIG. 5 is a flowchart showing a second control example which can be executed by the high-pressure washing machine of FIG. 2; and
FIG. 6 is a time chart corresponding to the flowchart of FIG. 5.

### BEST MODE FOR CARRYING OUT THE INVENTION

Hereinafter, an embodiment in which a liquid discharge apparatus of the present invention is applied to a high-pressure washing machine will be described with reference to drawings. A high-pressure washing machine 10 according to the present embodiment includes a washing machine body 11, a pump 12 provided in the washing machine body 11, a tank 13 storing a washing solution to be supplied to the pump 12, a brushless motor 14 which drives the pump 12, a control unit 15 which controls the brushless motor 14, and a battery pack 16 which supplies power to the brushless motor 14. A hose 18 which supplies the washing solution discharged from the pump 12 to a washing gun 17 is also provided.

The tank 13 is placed on an upper portion of the washing machine body 11, and the tank 13 is detachable to the washing machine body 11. As the washing solution injected into the tank 13, both water and water containing a surfactant agent are acceptable. The pump 12 has an operating member which is operated by the torque of the brushless motor 14, a suction port 12a connected to the tank 13, and a discharge port 12b connected to a flow channel 12c. The flow channel 12c is connected to the hose 18. As the pump 12, for example, a plunger pump can be used. The pump 12 sucks and discharges the washing solution by reciprocation of the plunger.

The washing gun 17 is a jetting device which jets the washing solution discharged from the pump 12. The washing gun 17 has a gun body 19, a nozzle 20 attached to the gun body 19, a flow channel 21 provided inside the gun body 19 and connecting the hose 18 to the nozzle 20, a valve 22 provided to the flow channel 21, and a trigger 23 which opens and closes the valve 22. The trigger 23 is operated by the operator. When no operation force is applied to the trigger 23, the valve 22 closes the flow channel 21, so that the washing solution is not discharged from the nozzle 20. When the operation force is applied to the trigger 23, the valve 22 opens the flow channel 21, so that the washing solution is jetted from the nozzle 20. The case of no application of the operation force to the trigger 23 is referred to as the trigger 23 being off. The case of the application of the operation force to the trigger 23 is referred to as the trigger 23 being on.

The battery pack 16 is detachable to the washing machine body 11. In the battery pack 16, a plurality of batteries are housed in its storage case. The batteries include a secondary battery which can be charged and discharging repeatedly, such as a lithium ion battery.

The brushless motor 14 is one type of a direct-current motor, and the brushless motor 14 includes a stator 14a and a rotor 14b. The stator 14a has three coils U1, V1, and W1 corresponding to a U-phase, a V-phase, and a W-phase, respectively, and the stator 14a does not rotate. The stator 14a is annularly arranged, and the rotor 14b is arranged so that the rotor can rotate inside the stator 14a. To an outer circumferential surface of the rotor 14b, a plurality of permanent magnets 14c are attached so as to be separated from one another in a circumferential direction. The plurality of permanent magnets 14c include several types of permanent magnets 14c different in polarity from each other so that permanent magnets 14c different in polarity are alternately arranged. Further, a power transmitting mechanism which transmits the torque of the rotor 14b to the plunger is also provided.

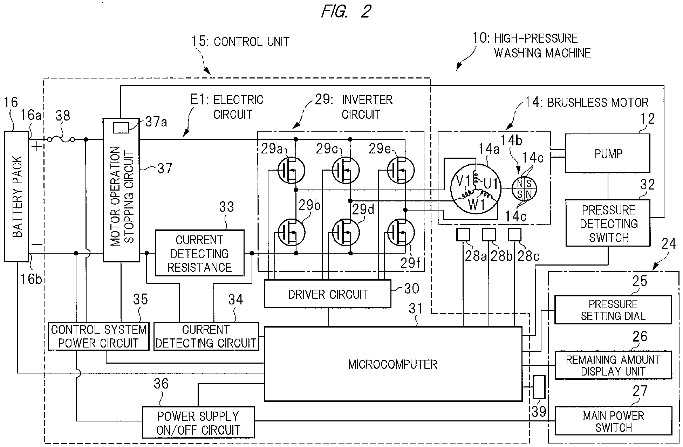

FIG. 2 is a block diagram showing a control system of the high-pressure washing machine 10. The washing machine body 11 is provided with an operation panel 24, and the operation panel 24 has a pressure setting dial 25, a remaining amount display unit 26, and a main power switch 27. The operator can set the discharge pressure of the washing solution by operating the pressure setting dial 25. The remaining amount display unit 26 displays a remaining amount of the battery pack 16, i.e., a voltage. The operator switches the main power switch 27 on and off to select start and stop of the high-pressure washing machine 10. As the main power switch 27, a publicly-known tactile switch can be used.

Hall ICs 28a to 28c which detect the rotation position of the rotor 14b of the brushless motor 14 are also provided. Three hall ICs 28a to 28c are provided at different positions from one another in the direction of rotation of the rotor 14b so as to correspond to the U-phase, the V-phase, and the W-phase, respectively. Each of the Hall ICs 28a to 28c is a contactless sensor not in contact with the rotor 14b, and each of the hall ICs 28a to 28c is a magnetic sensor which detects a magnetic field generated by the permanent magnet 14c attached to the rotor 14b and which outputs a signal in accordance with a magnitude of the magnetic field.

The control unit 15 includes an inverter circuit 29 for controlling a drive current supplied to the three coils U1, V1, and W1 making up the stator 14a. The inverter circuit 29 controls the drive current supplied to the coils U1, V1, and W1. The inverter circuit 29 is a three-phase full-bridge inverter circuit, and has two switching elements 29a and 29b connected in series, two switching elements 29c and 29d connected in series, and two switching elements 29e and 29f connected in series. Three switching elements 29a, 29c, and 29e are connected to a positive electrode 16a of the battery pack 16, while three switching elements 29b, 29d, and 29f are connected to a negative electrode 16b of the battery pack 16. The three switching elements 29a, 29c, and 29e connected to the positive electrode 16a of the battery pack 16 serve as a high side, and the three switching elements 29b, 29d, and 29f connected to the negative electrode 16b of the battery pack 16 serve as a low side.

Between the switching element 29a and the switching element 29b, one connection terminal of the coil U1 is connected. Between the switching element 29c and the switching element 29d, one connection terminal of the coil V1 is connected. Between the switching element 29e and the switching element 29f, one connection terminal of the coil W1 is connected. The other connection terminals of the coils U1, V1, and W1 are connected to one another so that the coils U1, V1, and W1 form a star connection. Note that the connection method of the coils U1, V1, and W1 may be a delta connection. For example, when a gate signal is input to the high-side switching element 29a and to the low-side switching element 29d, a current is supplied to the coil U1 and to the coil V1. By adjusting timing of input of the gate signal to each of the switching elements 29a to 29f, a value of the current supplied to each of the coils U1, V1, and W1 is controlled.

The control unit 15 includes a diver circuit 30, and the driver circuit 30 outputs the gate signal which switches on and off each of the switching elements 29a to 29f of the inverter circuit 29. The control unit 15 also includes a microcomputer 31. The microcomputer 31 has an input port, an output port, a memory unit, and a computing unit. A signal output from the pressure setting dial 25 and signals output from the Hall ICs 28a, 28b, and 28c are input to the microcomputer 31.

Further, a pressure detecting switch 32 which detects the pressure of the flow channel 12c is also provided. The flow channel 21 is connected to the flow channel 12c, and a pressure of the flow channel 21 is the same as a pressure of the flow channel 12c. The pressure detecting switch 32 is provided on the washing machine body 11. The pressure detecting switch 32 is, for example, a switch having a diaphragm. The pressure detecting switch 32 is switched on when the pressure of the flow channel 12c is lower than a first predetermined pressure, and is switched from on to off when the pressure of the flow channel 12c increases to become equal to or higher than the first predetermined pressure. The first predetermined pressure is the upper limit value of a pressure range in which the pressure detecting switch 32 is switched from on to off.

On the other hand, the pressure detecting switch 32 is switched from off to on when the pressure of the flow channel 12c decreases down to equal to or lower than a second predetermined pressure. The second predetermined pressure is the lower limit value of a pressure range in which the pressure detecting switch 32 is switched from off to on. The first predetermined pressure is higher than the second predetermined pressure. For example, the first predetermined pressure is 5.0 [MPa], and the second predetermined pressure is 3.5 [MPa]. The difference between the first predetermined pressure and the second predetermined pressure shows a hysteresis behavior. A reason why the pressure detecting switch 32 is made to show the hysteresis behavior as the characteristics of the on/off switching is to prevent frequent switching between the on-state and the off-state caused by slight variation of the pressure of the flow channel 12c. The pressure detecting switch 32 outputs a detection signal corresponding to the on-state or the off-state, and this signal output from the pressure detecting switch 32 is input to the microcomputer 31.

The control unit 15 includes a current detecting resistance 33 provided in an electric circuit E1 which supplies power from the battery pack 16 to the inverter circuit 29. The control unit 15 includes a current detecting circuit 34, the current detecting circuit 34 detects the values of currents supplied to the coils U1, V1, and W1 of the stator 14a based on a voltage drop at the current detecting resistance 33, and outputs a signal corresponding to the result of the detection to the microcomputer 31. Further, the control unit 15 includes a control system power circuit 35 connected between the battery pack 16 and the inverter circuit 29. The control system power circuit 35 converts a voltage of the battery pack 16 into a voltage for driving the microcomputer 31 and supplies the driving voltage thereto.

Further, the control unit 15 includes a power supply on/off circuit 36 to which a signal output from the main power switch 27 is input, and the power supply on/off circuit 36 controls the control system power circuit 35 based on the input signal. The microcomputer 31 inputs a signal which maintains a signal input from the power supply on/off circuit 36 to the control system power circuit 35. The microcomputer 31 detects the voltage of the battery pack 16 and outputs a signal, which indicates the result of detection of the voltage of the battery pack 16, to the remaining amount display unit 26.

The control unit 15 further includes a motor operation stopping circuit 37 provided on a path leading from the battery pack 16 to the inverter circuit 29 in the electric circuit E1. The motor operation stopping circuit 37 has a semiconductor switch, and the motor operation stopping circuit 37 switches on and off the electric circuit E1 which supplies power from the battery pack 16 to the brushless motor 14 based on an input signal from the control system power circuit 35. The motor operation stopping circuit 37 switches the on and off of the electric circuit E1 by not only the input signal from the control system power circuit 35 but also an input signal from the pressure detecting switch 32 without being sent through the microcomputer 31. The motor operation stopping circuit 37 is switched off by an off-signal input from the pressure detecting switch 32, and the motor operation stopping circuit 37 is switched on by an on-signal input from the pressure detecting switch 32.

In the electric circuit E1 connecting the battery pack 16 to the brushless motor 14, a fuse 38 is provided between the motor operation stopping circuit 37 and the battery pack 16. The fuse 38 is an electronic component which protects the electric circuit E1 from a large current equal to or larger than a rated current. Note that various pieces of data are stored in the memory unit of the microcomputer 31. The pieces of data stored in the memory unit include a map showing the relation between a target pressure set by operation of the pressure setting dial 25 and the rotation speed of the rotor 14b of the brushless motor 14. The target pressure set by the operation of the pressure setting dial 25 is lower than the second predetermined pressure of 3.5 [MPa], and the target pressure can be set, for example, within a range of 0.5 [MPa] to 2.0 [MPa].

The pieces of data stored in the memory unit also include a map showing the relation between the rotation speed of the rotor 14b of the brushless motor 14 and a duty ratio representing the ratio of the on-state of the switching elements 29a to 29f. The pieces of data stored in the memory unit further include a map showing the relation between the target pressure set by the operation of the pressure setting dial 25 and the value of a current supplied to the brushless motor 14.

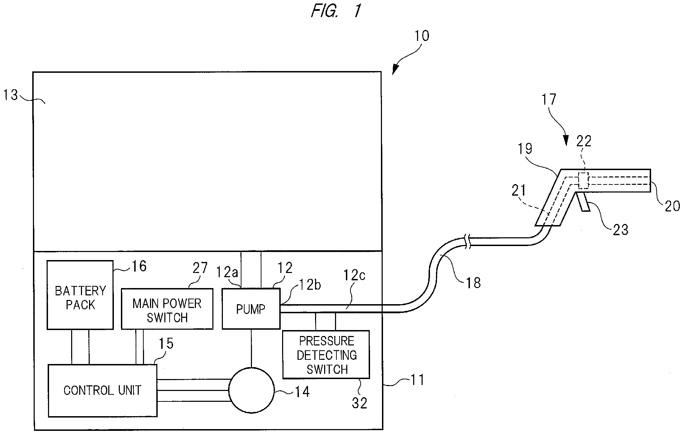

Note that the washing gun 17 may be provided with a trigger switch 39 as shown in FIG. 1 so that a signal from this trigger switch 39 is input to the microcomputer 31. In this case, the trigger switch 39 is switched on if an operation force is applied to the trigger 23, and the trigger switch 39 is switched off if no operation force is applied to the trigger 23. In this case, a signal from the trigger switch 39 is transmitted to the microcomputer 31 over the wireless. A cable through which the signal from the trigger switch 39 is transmitted may be provided to the hose 18. By connection of the hose 18 to the discharge port 12b, the cable is connected to the microcomputer 31.

### (First Control Example)

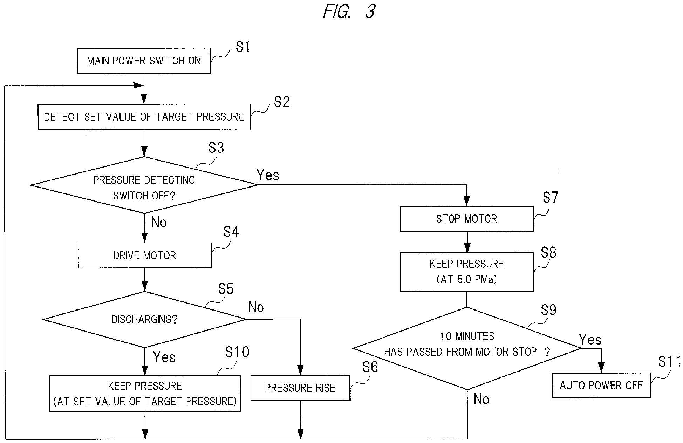

A first control example executed by the high-pressure washing machine 10 having the above-described configuration will be described with reference to a flowchart of FIG. 3. When the control unit 15 detects that the operator switches the main power switch 27 on at step S1, power from the battery pack 16 is supplied to the microcomputer 31 via the control system power circuit 35, so that the microcomputer 31 is activated. A signal is input from the control system power circuit 35 to the motor operation stopping circuit 37, so that the motor operation stopping circuit 37 switches the electric circuit E1 on.

At step S2, the control unit 15 detects the target pressure set by the operation of the pressure setting dial 25 or the rotation speed of the motor. At step S3, the control unit 15 determines whether the pressure detecting switch 32 is switched on or not. When the control unit 15 determines "No" at step S3, the control unit 15 executes control for driving the brushless motor 14 at step S4. By the input signal from the microcomputer 31 to the driver circuit 30 followed by the output signal from the driver circuit 30, each of the switching elements 29a to 29f of the inverter circuit 29 is switched on or off, and the power from the battery pack 16 is supplied to the coils U1, V1, and W1 of the stator 14a via the inverter circuit 29 to form a rotating magnetic field, so that the rotor 14b is rotated. As described above, the brushless motor 14 is driven.

Then, at step S5, the control unit 15 determines whether the washing solution is discharged from the nozzle 20 or not. The control unit 15 determines "Yes" at step S5 when the trigger 23 is operated, and controls the brushless motor 14 at step S10 so as to keep the target pressure as the pressure of the flow channel 12c, and then, returns to step S2.

In order to bring the pressure of the flow channel 12c to the target pressure, the control unit 15 determines a target rotation speed of the rotor 14b, and feedback-controls an actual rotation speed of the rotor 14b so as to bring the actual rotation speed of the rotor 14b closer to the target rotation speed. Specifically, the duty ratio representing the ratio of the on-state of the plurality of switching elements 29a to 29f making up the inverter circuit 29 is controlled. By increase in the duty ratio, the actual rotation speed of the rotor 14b is increased. By decrease in the duty ratio, the actual rotation speed of the rotor 14b is decreased. The control unit 15 determines timing of switching on the switching elements 29a to 29f based on the rotation position of the rotor 14b. In this manner, the control unit 15 controls the value of the current supplied to the brushless motor 14 so that the pressure of the flow channel 12c is temporarily brought to 5.0 [MPa].

On the other hand, when the washing solution is not discharged from the nozzle 20, that is, when the trigger 23 is not operated, the control unit 15 determines "No" at step S5, executes a process of step S6, and returns to step S2. At step S6, the brushless motor 14 is driven, so that the pressure of the flow channel 12c increases. When the control unit 15 drives the brushless motor 14 to increase the pressure of the flow channel 12c, the control unit 15 proceeds to step 2 again followed by step S3, and determines "Yes" when the pressure exceeds the first predetermined pressure of 5.0 [MPa].

Then, at step S7, an off-signal from the pressure detecting switch 32 is transmitted to the motor operation stopping circuit 37, so that the motor operation stopping circuit 37 switches the electric circuit E1 off to stop the brushless motor 14. When the brushless motor 14 stops, the control unit 15 proceeds to step S8 so that the pressure of the flow channel 12c is kept at 5.0 [MPa] or lower. The control unit 15 then proceeds to step S9, and determines whether it has taken predetermined time, e.g., 10 minutes from the stop of the brushless motor 14 at step S7 or not. When the control unit 15 determines "No" at step S9, the control unit 15 proceeds to step S2 followed by step S3.

When the washing solution leaks out to decrease the pressure of the flow channel 12c down to the second predetermined pressure of 3.5 [MPa] even if the trigger 23 is off after the stop of the brushless motor 14, the control unit 15 determines "No" at step S3 which is three-times repeated step S3. Then, the control unit 15 proceeds to step S4 again followed by step S5. At step S5, the control unit 15 determines "No" since the trigger 23 is off so that the washing solution is not discharged, and proceeds to step S6. Since the brushless motor 14 is driven at step S4, the pressure increases at step S6. Then, the control unit 15 proceeds to step S2 again followed by step S3. Since the pressure immediately increases up to the first predetermined pressure of 5.0 [MPa] at step S6, the pressure detecting switch 32 is switched from on to off, and the control unit 15 determines "Yes" and proceeds to step S7.

When the control unit 15 determines "Yes" at step S9, the control unit 15 proceeds to step S11, and executes auto power-off control. The auto power-off control is control for cutting off the current supplied to the microcomputer 31 via the control system power circuit 35. Even when the operator switches the main power switch 27 off, note that the control unit 15 causes the control system power circuit 35 to switch off the motor operation stopping circuit 37 and cut off the voltage supplied to the microcomputer 31. When the trigger switch 39 is provided, note that the control unit 15 may determine indirectly from a signal from the trigger switch 39 whether the washing solution is discharged from the nozzle 20 or not at step S5. Alternately, the voltage to be supplied to the microcomputer 31 may not be cut off. In this case, the remaining amount of the battery of the battery pack 16, i.e., the voltage of the same is detected, and the detected voltage is displayed by the remaining amount display unit 26.

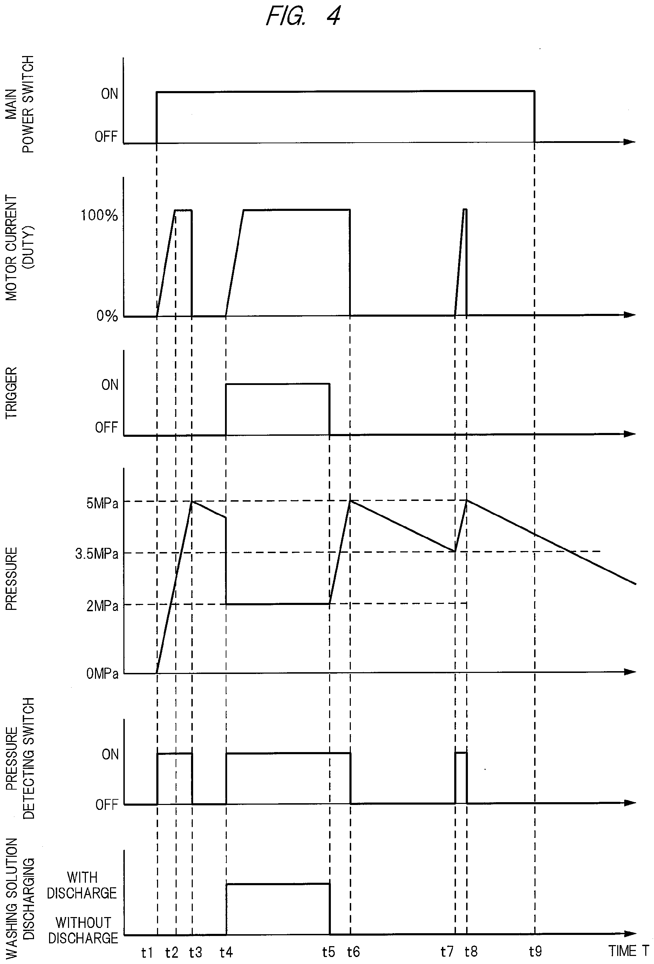

An example of a time chart corresponding to the flowchart of FIG. 3 will be described with reference to FIG. 4.

First, before time t1, the main power switch 27 is switched off so that the duty ratio of the value of the current supplied to the brushless motor 14 is 0%, the trigger 23 is off so that the pressure of the flow channel 12c is 0 [MPa], and the pressure detecting switch is off so that no washing solution is discharged from the nozzle 20.

At time t1, the main power switch 27 is switched on, so that the pressure of the flow channel 12c changes to switch the pressure detecting switch 32 from off to on, the duty ratio increases from 0% to start the rotation of the brushless motor 14, and the pump 12 is driven. Since the trigger 23 is off, the pressure of the flow channel 12c increases on or after time t1. The duty ratio reaches 100% at time t2, and is kept at 100% after time t2.

At time t3, when the pressure of the flow channel 12c reaches 5.0 [MPa], the pressure detecting switch 32 is switched from on to off, so that the motor operation stopping circuit 37 is switched off, and the duty ratio becomes 0%. That is, the brushless motor 14 stops.

Also after time t3, although the trigger 23 is off, the pressure of the flow channel 12c decreases because of the leakage of the washing solution. At time t4, when the trigger 23 is switched on to discharge the washing solution from the nozzle 20, the pressure of the flow channel 12c rapidly decreases down to 3.5 [MPa] or lower, and the pressure detecting switch 32 is switched from off to on. Therefore, the motor operation stopping circuit 37 is switched on at time t4, and the duty ratio increases on or after time t4. Also on or after time t4, during the discharge of the washing solution from the nozzle 20, the value of the current supplied to the brushless motor 14 is controlled constant so that the pressure of the flow channel 12c is kept at the target pressure of, for example, 2.0 [MPa].

At time t5, when the trigger 23 is switched off to stop the discharge of the washing solution from the nozzle 20, the pressure of the flow channel 12c increases. At time t6, when the pressure of the flow channel 12c increases up to 5.0 [MPa], the pressure detecting switch 32 is switched from on to off to switch the motor operation stopping circuit 37 off, so that the duty ratio is switched from 100% to 0%.

On or after time t6, although the trigger 23 is off, the pressure of the flow channel 12c decreases because of the leakage of the washing solution. At time t7, when the pressure of the flow channel 12c decreases down to 3.5 [MPa], the pressure detecting switch 32 is switched from off to on. Therefore, the motor operation stopping circuit 37 is switched on at time t7, and the duty ratio increases on or after time t7. Also after time t7, the trigger 23 is switched off, so that the pressure of the flow channel 12c increases.

Further, at time t8, when the pressure of the flow channel 12c increases up to 5.0 [MPa], the pressure detecting switch 32 is switched from on to off to switch the motor operation stopping circuit 37 off, so that the duty ratio is switched from 100% to 0%. On or after time t8, the pressure of the flow channel 12c decreases because of the leakage of the washing solution. At time t9 at which the pressure of the flow channel 12c exceeds 3.5 [MPa], the main power switch 27 is switched off.

As described above, in the high-pressure washing machine 10 of the present embodiment, a signal from the pressure detecting switch 32 is input to the motor operation stopping circuit 37 so as to bypass the microcomputer 31 so that the on-state and the off-state of the motor operation stopping circuit 37 can be switched. Therefore, when the rotor 14b of the brushless motor 14 is rotated and the rotation speed of the rotor 14b is controlled by the microcomputer 31, the control unit 15 can switch the motor operation stopping circuit 37 off to stop the rotor 14b of the brushless motor 14.

Therefore, when the microcomputer 31 does not normally operate due to noise, thermal runaway, etc., while the rotor 14b of the brushless motor 14 is rotating, the high-pressure washing machine 10 can switch the motor operation stopping circuit 37 off to stop the rotor 14b. In other words, when the microcomputer 31 or the inverter circuit 29 fails, the motor operation stopping circuit 37 can be used as a fail-safe component for stopping the brushless motor 14.

The high-pressure washing machine 10 can control the discharge pressure of the washing solution discharged from the nozzle 20, by controlling the rotation speed of the brushless motor 14. Therefore, it is not required to provide a pressure control mechanism, such as a relief valve, which controls the pressure of the flow channel 12c. Thus, a structure of the high-pressure washing machine 10 can be simplified and downsized, so that a manufacturing cost can be reduced.

### (Second Control Example)

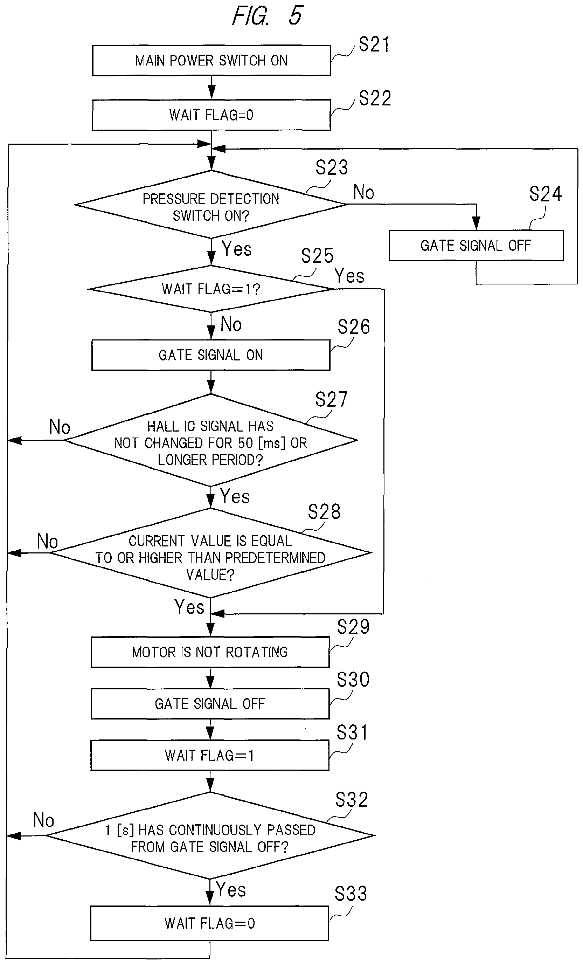

Next, a second control example which can be executed by the high-pressure washing machine 10 will be described based on FIG. 5. A flowchart of FIG. 5 is a control example performed when the brushless motor 14 is activated by decrease in the pressure down to the second predetermined pressure of 3.5 [MPa]. The second control example has a control concept of the value of the current supplied to the brushless motor 14 in accordance with a load on the rotor 14b for rotating the rotor 14b of the stopped brushless motor 14.

First, the control unit 15 detects that the main power switch 27 is on at step S21, and executes a process of setting "wait flag = 0" at step S22. The wait flag is a variable used for determining whether a condition for stopping the brushless motor 14 is met or not, that is, whether it is OK to supply the brushless motor 14 with a current flow or not. The state of "wait flag = 0" means that the condition for stopping the brushless motor 14 is not met. This means that it is OK to supply the brushless motor 14 with a current flow.

When time has passed while the pressure detecting switch 32 and the trigger 23 are off, the pressure detected by the pressure detecting switch 32 decreases because of the leakage of the washing solution. At step S23 following the process of step S22, the control unit 15 determines whether the pressure detecting switch 32 is on or not.

When the control unit 15determines "No" at step S23, the control unit 15 proceeds to step S24 so as to execute a process of cutting off a gate signal for controlling the switching elements 29a to 29f of the inverter circuit 29, and then, returns to step S23. Therefore, the stop of the brushless motor 14 is kept.

When the control unit 15 determines "Yes" at step S23, the control unit 15 determines whether "wait flag = 1" is set or not at step S25. The state of "wait flag = 1" means that the condition for stopping the brushless motor 14 is met. That is, this means that no current is flowing through the brushless motor 14. Since the process of setting "wait flag = 0" has been performed at step S22, the control unit 15 determines "No" at step S25, and proceeds to step S26, so that the gate signal is input to from the driver circuit 30 the switching elements 29a to 29f of the inverter circuit 29.

That is, the control unit 15 applies voltages to the coils U1, V1, and W1, so that the torque is generated by the rotor 14b of the brushless motor 14. Note that the torque generated by the rotor 14b through the control at step S26 has a low value which does not rotate the rotor 14b when the pressure of the flow channel 12c exceeds 2.0 [MPa].

At step S26 followed by step S27, the control unit 15 determines whether or not the signals output from the Hall ICs 28a, 28b, and 28c have not changed for 50 [ms] or longer. When the control unit 15 determines "Yes" at step S27, the control unit 15 proceeds to step S28 to determine whether or not the values of currents supplied to the coils U1, V1, and W1 are equal to or larger than a predetermined current value. The predetermined current value used at step S28 is, for example, a value obtained by experiments and simulations based on, for example, conditions for the durability of the brushless motor 14, heat resistance of the same, and others. Specifically speaking, the predetermined value is equal to or larger than the value of the current which is supplied to the brushless motor 14 in order to keep the actual pressure of the flow channel 12c at 2.0 [MPa], which is the maximum value of the target pressures set by the operation of the pressure setting dial 25, while the flow channel 12c is open.

The control unit 15 determines the load on the brushless motor 14 from the values of currents supplied to the coils U1, V1, and W1. The load on the brushless motor 14 becomes a resistance which attempts to prevent the rotation of the rotor 14b. In the present embodiment, the pressure of the flow channel 12c is regarded as the load on the brushless motor 14. That is, this means that the higher the pressure of the flow channel 12c is, the larger the load on the brushless motor 14 is. The values of currents supplied to the coils U1, V1, and W1 are detected by the current detecting circuit 34. The control unit 15 makes the determination at step S28, so that the pressure of the flow channel 12c can be indirectly detected from the values of currents supplied to the coils U1, V1, and W1.

When the control unit 15 determines "Yes" at step S28, the control unit 15 proceeds to step S29 to determine that the rotor 14b of the brushless motor 14 is not rotating. At step S29 followed by step 30, the control unit 15 executes a process of cutting off the gate signal input from the driver circuit 30 to the switching elements 29a to 29f. At step S30 followed by step 31, the control unit 15 executes a process of setting "wait flag = 1".

At step S31 followed by step 32, the control unit 15 determines whether a predetermined time of 1 [s] has continuously passed or not from the cutting off of the gate signal. When the control unit 15 determines "Yes" at step S32, the control unit 15 proceeds to step S33, executes a process of setting "wait flag = 0", and then, returns to step S23.

When the control unit 15 determines "No" at step S27, S28, or S32, the control unit 15 returns to step S23. Note that the control unit 15 determines "No" at step S32, and then, proceeds to step S25 again, and, if the control unit 15 determines "Yes" at step S25, the control unit 15 proceeds to step S29.

Further, when the control unit 15 determines "No" at step S27 and when the trigger 23 is on, the control unit 15 executes a process of repeating steps S23 to S27. That is, the control unit 15 feedback-controls the value of the current supplied to the brushless motor 14 so that the pressure of the flow channel 12c becomes the target pressure.

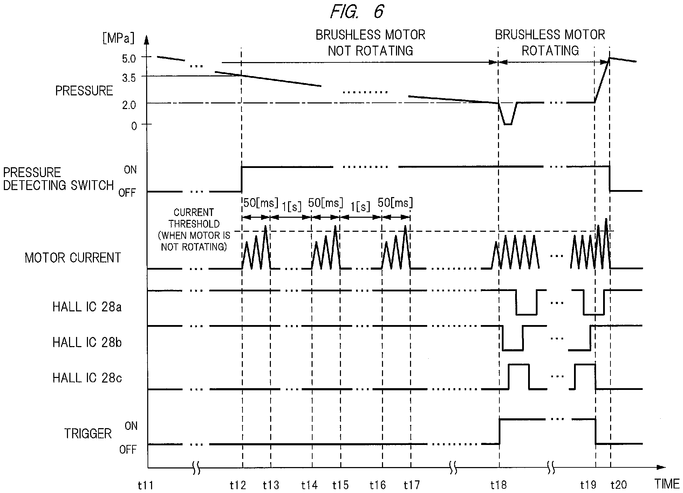

A time chart corresponding to the second control example will be described based on FIG. 6. The time chart shown in FIG. 6 indicates time-dependent change in parameters related to the controls of the control unit 15 after the period of time at which the pressure detecting switch is switched from on to off and the brushless motor 14 is stopped.

Since the trigger 23 is off and the pressure inside the flow channel 12c is 5.0 [MPa] at time t11, the pressure detecting switch 32 is switched off, and the motor operation stopping circuit 37 switches the electric circuit E1 off. Therefore, at time t11, no current is supplied to the brushless motor 14, so that the brushless motor 14 stops.

On or after time t11, although the trigger 23 is off, the pressure inside the flow channel 12c decreases because of the leakage of the washing solution. During a period of time in which the pressure inside the flow channel 12c exceeds 3.5 [MPa], the pressure detecting switch 32 is switched off. Therefore, the motor operation stopping circuit 37 is switched off, so that no current is supplied to the brushless motor 14.

Then, when the pressure inside the flow channel 12c becomes equal to or lower than 3.5 [MPa] at time t12, the pressure detecting switch 32 is switched on, and the motor operation stopping circuit 37 is also switched on. On or after time t12, the control unit 15 switches the gate signal on, so that the current is supplied to the coils U1, V1, and W1 of the brushless motor 14. That is, the torque is generated in the rotor 14b. If the load on the rotor 14b is large, the values of currents supplied to the coils U1, V1, and W1 of the brushless motor 14 become equal to or larger than a threshold. This threshold corresponds to the predetermined value used for the determination at step S28. The current value corresponding to the predetermined value is equal to or larger than the value of the current which is supplied to the brushless motor 14 in order to bring the pressure of the flow channel 12c to the target pressure.

However, from time t12 to time t13 when 50 [ms] has passed from the time t12, signals from the Hall ICs 28a, 28b, and 28c do not change. That is, although the torque is generated in the rotor 14b, the rotor 14b does not rotate because the torque has a value by which the rotor 14b cannot rotate when the pressure of the flow channel 12c is equal to or larger than 2.0 [MPa]. Therefore, on or after time t13, the gate signals are not input so that the current is not supplied to the coils U1, V1, and W1 of the brushless motor 14.

From time t13 to time t14 when 1 [s] has passed from the time t13, the gate signals are input so that the current is supplied again to the coils U1, V1, and W1 of the brushless motor 14. The values of currents supplied to the coils U1, V1, and W1 are equal to or larger than the predetermined current value. However, from time t14 to time t15 when 50 [ms] has passed from the time t14, signals from the Hall ICs 28a, 28b, and 28c do not change. That is, the rotor 14b does not rotate. Therefore, on or after time t15, the gate signals are not input so that the current is not supplied to the coils U1, V1, and W1.

Further, from time t15 to time t16 when 1 [s] has passed from the time t15, the gate signals are switched on so that the current is supplied to the coils U1, V1, and W1. The values of currents supplied to the coils U1, V1, and W1 are equal to or larger than the predetermined current value. However, from time t16 to time t17 when 50 [ms] has passed from the time t16, signals from the Hall ICs 28a, 28b, and 28c do not change. That is, the rotor 14b does not rotate. Therefore, on or after time t17, the gate signals are not input so that the current is not supplied to the coils U1, V1, and W1.

From time t12 and time t17 described above, although the trigger 23 is off, the pressure of the flow channel 12c decreases because of the leakage of the washing solution. At time t18, the operator switches the trigger 23 on. In the time chart of FIG. 6, the processes from time t12 to time t18, that is, the steps S23 to S33 of FIG. 5 are repeated. That is, as seen in the situation on or before time t18, if the pressure of the flow channel 12c is equal to or higher than 2.0 [MPa] when the trigger 23 is not operated, the control unit 15 prohibits the rotation of the brushless motor 14. That is, the control unit 15 generates such a torque by which the brushless motor 14 cannot rotate.

When the trigger 23 is switched on at time t18, the washing solution is jetted from the nozzle 20, so that the pressure of the flow channel 12c rapidly decreases. As a result, the current is supplied to the coils U1, V1, and W1 to rotate the rotor 14b of the brushless motor 14, so that the pressure of the flow channel 12c increases. The pressure of the flow channel 12c is controlled to a target pressure, e.g., 2.0 [MPa], set by the operation of the pressure setting dial 25. After time t18, the load on the rotor 14b is smaller than a predetermined load value because the pressure of the flow channel 12c is controlled at 2.0 [MPa]. That is, the values of currents supplied to the coils U1, V1, and W1 of the brushless motor 14 are lower than the threshold. In this manner, when the pressure of the flow channel 12c is lower than the target pressure, the control unit 15 allows the brushless motor 14 to rotate.

At time t19, the trigger 23 is switched off to close the valve 22, so that the washing solution is not jetted from the nozzle 20. That is, because the brushless motor 14 continues to rotate, the pressure of the flow channel 12c increases on or after time t19. When the pressure of the flow channel 12c reaches 5.0 [MPa] at time t20, the pressure detecting switch 32 is switched off, and the motor operation stopping circuit 37 is also switched off. As a result, on or after time t20, no current is supplied to the coils U1, V1, and W1, so that the brushless motor 14 stops. Therefore, the signals from the Hall ICs 28a, 28b, and 28c, do not change on or after time t20.

As described above, when the control unit 15 executes the second control example, the pressure detecting switch 32 is switched off to stop the brushless motor 14, and then, the pressure detecting switch 32 is switched on when the pressure of the flow channel 12c is equal to or lower than 3.5 [MPa], and the current is supplied to the coils U1, V1, and W1 of the brushless motor 14 once through control by the inverter circuit 29.

And, the current supply to the coils U1, V1, and W1 is stopped when the load on the rotor 14b is large, for example, when the pressure of the flow channel 12c is equal to or higher than the target pressure, i.e., 2.0 [MPa], while the current is supplied to the coils U1, V1, and W1 of the brushless motor 14 to generate the torque in the rotor 14b. That is, the rotation of the rotor 14b of the brushless motor 14 is prohibited.

On the other hand, the rotation of the rotor 14b of the brushless motor 14 is allowed when the load on the rotor 14b is small because the pressure of the flow channel 12c is lower than 2.0 [MPa], while the current is supplied to the coils U1, V1, and W1 of the brushless motor 14 to generate the torque in the rotor 14b. That is, the current supply to the coils U1, V1, and W1 is continued, so that the rotor 14b rotates. Therefore, this manner can prevent supply of a large current to the coils U1, V1, and W1 when the stopping brushless motor 14 is started to rotate. Therefore, decrease in the durability and heat resistance of the brushless motor 14 can be prevented. Further, the control unit 15 determines that either the rotation of the rotor 14b is allowed or stopped, based on the values of currents supplied to the coils U1, V1, and W1. Therefore, regardless of the signal from the pressure detecting switch 32, the rotation speed of the rotor 14b of the brushless motor 14 can be controlled.

That is, in the second control example executed by the control unit 15, the current supply to the coils U1, V1, and W1 is cut off if the load on the rotor 14b is relatively large when the current is supplied to the coils U1, V1, and W1 even when the pressure of the flow channel 12c is equal to or lower than 3.5 [MPa] which is the pressure which switches the pressure detecting switch 32 on. On the other hand, in the second control example executed by the control unit 15, the current supply to the coils U1, V1, and W1 is continued if the load on the rotor 14b is relatively small when the current is supplied to the coils U1, V1, and W1 even when the pressure of the flow channel 12c is equal to or lower than 3.5 [MPa] which is the pressure which switches the pressure detecting switch 32 on.

Also in the execution of the second control example by the control unit 15, the motor operation stopping circuit 37 can be switched off by switching the pressure detecting switch 32 off regardless of the function of the microcomputer 31. Note that the control unit 15 may execute the first control example and the second control example so as to be separated from or be combined with each other. In the case of execution of the combination of the first control example and the second control example, when the control unit 15 proceeds to step 3 followed by step S4 after the brushless motor 14 is stopped at step S7 in the first control example, the control unit 15 can execute a third control example as a subroutine. , And, the control unit 15 can be configured so as to determine the load status at step S28 from not the value of the current flowing through the brushless motor 14 but the rotation speed of the brushless motor 14.

The correspondence between a configuration described in the present embodiment and a configuration in the present invention will be described. The high-pressure washing machine 10 corresponds to a liquid discharge apparatus of the present invention, the brushless motor 14 corresponds to an electric motor of the present invention, the electric circuit E1 corresponds to a path of the present invention, the pressure detecting switch 32 and motor operation stopping circuit 37 correspond to a switch mechanism of the present invention, the motor operation stopping circuit 37 corresponds to a selector switch of the present invention, and the pressure detecting switch 32 corresponds to a pressure detecting unit of the present invention. The inverter circuit 29, driver circuit 30, and microcomputer 31 correspond to a motor control unit of the present invention, the switching element 29a corresponds to a switching element of the present invention, and the pressure setting dial 25 corresponds to a pressure setting unit of the present invention. The flow channel 21 corresponds to a flow channel of the present invention, and the target pressure of the flow channel 12c corresponds to a target discharge pressure of the present invention. The value 5.0 [MPa] corresponds to a first predetermined pressure and to a predetermined pressure of the present invention, and the value 3.5 [MPa] corresponds to a second predetermined pressure of the present invention. The current detecting circuit 34 and microcomputer 31 correspond to a load detecting unit of the present invention.

And, the inverter circuit 29 and microcomputer 31 correspond to a first circuit unit of the present invention, and the motor operation stopping circuit 37 corresponds to a second circuit unit of the present invention. Further, the switching between the on-state and off-state of the pressure detecting switch 32 corresponds to a signal change of the present invention. The electric circuit E1 corresponds to a "current path" of the present invention.

The present invention is not limited to the foregoing embodiments and various modifications can be made within the scope of the present invention. For example, the liquid discharge apparatuses of the present invention are apparatuses which apply a pressure to liquid sucked in a pump to discharge the liquid, and the liquid discharge apparatuses of the present invention include not only a high-pressure washing machine which removes dirt of an object but also a spray apparatus which forms mist from water and sprays the mist onto fields, and a spray apparatus which forms mist from chemical solution and sprays the mist onto vegetables or garden plants to expel insect pests. In other words, according to the present invention, the liquid discharged from the pump includes water, washing solution, and chemical solution.

The present invention includes a secondary battery serving as a power supply which supplies a current to an electric motor. In other words, the washing machine according to the embodiment is a portable washing machine. The secondary battery may be a battery such as a nickel cadmium battery, a nickel hydrogen battery, and a lithium ion polymer battery except for a lithium ion battery. The liquid discharge apparatus of the present invention includes a structure in which a current can be supplied from both a secondary battery and an alternate-current power supply to an electric motor. The liquid discharge apparatus of the present invention also includes a structure in which a current can be supplied only from an alternate-current power supply to an electric motor.

Further, the liquid discharge apparatus of the present invention includes not only a structure in which liquid inside a tank is sucked by a pump but also a structure in which water supplied from a tap is sucked by a pump. To the electric motor, both of a direct-current brushless motor and an alternate-current brushless motor are applicable. To the electric motor, a power supply mechanism which supplies power of an alternate-current power supply can be provided. The pressure detecting switch may be provided to the washing gun 17. This case has a signal cable through which signals are exchanged between the pressure detecting switch provided to the washing gun and the control unit provided to the washing machine body. The signal cable may be bundled together with, for example, a hose. Further, a structure for wirelessly transmitting signals may be applicable. The discharge pressure setting unit includes a dial, a touch panel, and a lever. The pressure detecting unit includes not only a pressure sensor equipped with a diaphragm but also a pressure sensor equipped with a Bourdon tube and a pressure sensor equipped with a bellows. The pressure detecting unit may be switched on when the pressure of the washing solution is equal to or higher than the first predetermined pressure, and may be switched off when the pressure is equal to or lower than the second predetermined pressure. The first predetermined pressure is higher than the second predetermined pressure. That is, the pressure detecting unit may output different signals from each other depending on the case in which the pressure of the washing solution is equal to or higher than the first predetermined pressure and the case in which it is equal to or lower than the second predetermined pressure and may switch the motor operation stopping circuit on and off.

### EXPLANATION OF REFERENCE CHARACTERS

10 ... high-pressure washing machine, 11 ... washing machine body, 12 ... pump, 12c and 21 ... flow channel, 13 ... tank, 14 ... brushless motor, 14a ... stator, 14b ... rotor, 15 ... control unit, 16 ... battery pack, 25 ... pressure setting dial, 27 ... main power switch, 29 ... inverter circuit, 29a to 29f ... switching element, 32 ... pressure detecting switch, 37 ... motor operation stopping circuit, 37a ... semiconductor switch, 38 ... fuse, E1 ... electric circuit

## Claims

1. A liquid discharge apparatus comprising:
an electric motor which is rotated by supply of a current; and
a pump which is driven by a torque of the electric motor to suck and discharge liquid, **characterized in that**
the liquid discharge apparatus includes:
a motor control unit which controls a rotation speed of the electric motor when the pump is driven by the torque of the electric motor; and
a switch mechanism which detects a discharge pressure of the pump and which switches on or off a path of a current supplied to the electric motor based on a result of the detection.

2. The liquid discharge apparatus according to claim 1,
wherein the motor control unit includes:
an inverter circuit having a plurality of switching elements which are switched on and off in order to supply a current to the electric motor; and
a microcomputer which controls switching on and off of the plurality of switching elements, and
the switch mechanism includes:
a selector switch which switches on and off a path reaching from a power supply to the inverter circuit; and
a pressure detecting unit which detects a discharge pressure of the pump and switches an operation of the selector switch based on a result of the detection.

3. The liquid discharge apparatus according to claim 1 or 2,
wherein a pressure setting unit which sets a target value of a discharge pressure of the pump is provided, and,
when the discharge pressure of the pump is equal to or higher than a first predetermined pressure, the switch mechanism switches off the path to stop the electric motor.

4. The liquid discharge apparatus according to claim 3,
wherein, when a flow channel for liquid discharged from the pump is closed, the switch mechanism cuts off the path to stop the electric motor.

5. The liquid discharge apparatus according to claim 3,
wherein, when a discharge pressure of the pump becomes equal to or lower than a second predetermined pressure lower than the first predetermined pressure, the switch mechanism switches on the path.

6. The liquid discharge apparatus according to claim 5,
wherein, when a flow channel for liquid discharged from the pump is opened, the motor control unit executes control for supplying a current to the electric motor to rotate the electric motor, and controls a rotation speed of the electric motor based on a target discharge pressure of the pump.

7. The liquid discharge apparatus according to claim 6,
wherein the target discharge pressure is lower than the second predetermined pressure.

8. The liquid discharge apparatus according to claim 6,
wherein a load detecting unit which detects a load on the electric motor to which a current is supplied is provided, and
the motor control unit executes control for keeping stop of the electric motor when the load is equal to or larger than a predetermined value and control for rotating the electric motor when the load is smaller than the predetermined value.

9. A liquid discharge apparatus comprising:
an electric motor rotated by supply of a current; and
a pump driven by a torque of the electric motor to suck and discharge liquid, **characterized in that**
a pressure detecting unit which detects a pressure of the pump;
a first circuit which stops the electric motor based on a signal input from the pressure detecting unit; and
a second circuit provided on a path for supplying a current to the electric motor so as to be separated from the first circuit, the second circuit closing a path of the current to stop the electric motor, based on a signal input from the pressure detecting unit.

10. The liquid discharge apparatus according to claim 9,
wherein, when a pressure of the pump becomes equal to or higher than a predetermined pressure, the pressure detecting unit changes the signal, and,
when the signal from the pressure detecting unit is changed, the first circuit and the second circuit stop the electric motor.

11. The liquid discharge apparatus according to claim 10,
wherein the first circuit includes:
a switching element which is provided on the path of the current and which is switched on and off to supply power to the electric motor; and
a microcomputer which controls the switching on and off of the switching element,
the second circuit includes a semiconductor switch provided on the path of the current, and,
when the signal from the pressure detecting unit is changed to switch off at least one of the switching element and the semiconductor switch, the electric motor is stopped.

12. The liquid discharge apparatus according to any one of claims 9 to 11,
wherein a fuse which closes the path of the current when a current equal to or larger than a rated current flows through the path of the current is provided.
